Europäisches Patentamt

(19) European Patent Office

Office européen des brevets

(11) Numéro de publication: **0 100 807**
**A1**

(12) **DEMANDE DE BREVET EUROPEEN**

(21) Numéro de dépôt: **82810341.6**

(22) Date de dépôt: **12.08.82**

(51) Int. Cl.³: **G 01 B 7/00**

(43) Date de publication de la demande:
**22.02.84 Bulletin 84/8**

(84) Etats contractants désignés:
**AT BE CH DE FR GB IT LI LU NL SE**

(71) Demandeur: **MECANOR S.A.**
**Mittelstrasse 24**
**CH-2560 Nidau(CH)**

(72) Inventeur: **Geier, Hermann**
**65, chemin Marnière**
**CH-2068 Hauterive(CH)**

(72) Inventeur: **Ducommun, Pierre-François**
**32, rue Haute**
**CH-1422 Grandson(CH)**

(74) Mandataire: **Tordion, Serge**
**Cabinet de Conseil en brevets 23, rue du Marché-Neuf**
**Case postale 182**
**CH-2500 Bienne 3(CH)**

(54) **Instrument de mesure par contact électrique.**

(57) Le circuit de mesure de l'instrument comprend une borne (A), reliée à une face d'appui de cet instrument, sur laquelle une pièce à mesurer peut être disposée, et une borne (B), reliée à un palpeur mobile de l'instrument, qui est destiné à mesurer une cote de cette pièce. La borne (A) est connectée à une source de courant constant, elle-même reliée au pôle positif d'une batterie (21) et composée de la résistance $(R_1)$ et du transistor $(T_1)$, dont la base est polarisée par l'amplificateur opérationnel $(AO_1)$ de façon à maintenir le point (c) au potentiel de référence, qui est déterminé par la diode (Z). La borne (B) est reliée au pôle négatif de la batterie (21) à travers une résistance $(R_2)$. Au moment où le palpeur de l'instrument entre en contact avec la pièce à mesurer, une différence de potentiel apparaît aux bornes (d) et (e) de la résistance $(R_2)$, qui est utilisée, d'une part, pour exciter la diode (24) et éventuellement le vibreur (26) au moyen des amplificateurs opérationnels de puissance $(AO_2)$ et à gain variable $(AO_3)$, et, d'autre part, pour bloquer l'affichage de la mesure fourni par l'appareil (12), en excitant le relais (29) au travers de la fonction logique (32), au choix, soit directement soit à travers une bascule bistable (34), qu'il s'agit de remettre à zéro en pressant le bouton du contact (35).

Fig. 3

- 1 -

## INSTRUMENT DE MESURE PAR CONTACT ELECTRIQUE

Les instruments de mesure selon le préambule de la revendication 1 sont recherchés essentiellement dans les cas où l'opérateur ne peut pas, sans risquer de déformer la pièce à mesurer, déterminer par ses seuls sens à quel moment le palpeur de l'instrument entre en contact avec cette pièce. Cela arrive en particulier lorsque le point de la pièce, dont la cote doit être mesurée, se trouve sur une partie très flexible de cette pièce, par exemple au bout d'une languette élastique.

Si l'on veut pallier la déficience des sens de l'opérateur en faisant passer un courant électrique à travers la pièce à mesurer au moment où le palpeur de l'instrument entre en contact avec cette pièce, il faut éviter qu'une décharge électrique entre le palpeur et la pièce à mesurer se produise avant que celui-ci n'ait atteint cette dernière. Il faut même écarter tout risque d'étincelage entre le palpeur et la pièce à mesurer, afin de ne pas détériorer ces éléments. Cela entraîne la nécessité d'opérer avec un courant de mesure très faible. Pour actionner un avertisseur perceptible, il est dès lors indispensable d'adjoindre un circuit d'alimentation de cet avertisseur au circuit de mesure et de relier ces deux circuits de façon qu'ils se ferment en même temps.

Un courant de mesure faible est cependant exposé à de grandes variations d'intensité dues à la résistance ohmique du contact entre le palpeur et la pièce à mesurer, qui, selon la configuration et la nature du point de la pièce dont il s'agit de mesurer la cote, peut varier de 0 à quelques centaines de kiloohms.

Or, dans les instruments connus, conformes au préambule de la revendication 1, le courant qui circule dans le circuit de mesure, lorsque le palpeur arrive en contact avec la pièce à mesurer, est si faible, quand la résistance ohmique de ce contact est élevée, qu'il ne parvient plus à exciter le circuit de l'avertisseur. Ce dernier n'entre alors en fonction qu'au moment où la pression du palpeur sur la pièce à mesurer a été accrue au point de réduire la résistance ohmique du contact entre ces deux pièces dans une mesure suffisante pour permettre au courant de mesure d'exciter le circuit de l'avertisseur. Dans les cas où le point de la pièce dont il s'agit de déterminer la cote se trouve sur une partie très flexible de cette pièce, une augmentation de la pression du palpeur sur la pièce est accompagnée d'une déformation de la dite partie de la pièce, de sorte qu'au moment où l'opérateur est averti du contact, le point en question de la pièce n'est plus dans sa position naturelle.

La caractéristique de la revendication 1 définit un instrument exempt des inconvénients des instruments connus. Grâce à son générateur de courant constant, la résistance ohmique du contact entre le palpeur de l'instrument et la pièce à mesurer n'influence pas le courant de mesure. Dès que le palpeur entre en contact avec la pièce à mesurer, un courant d'intensité prédéterminée passe dans ces deux pièces et, par conséquent, dans le circuit de mesure. Il suffit dès lors d'agencer le circuit de l'avertisseur en fonction de ce courant de mesure, pour que l'avertisseur entre en fonction, sans coup férir, au moment même où le palpeur de l'instrument entre en contact avec la pièce à mesurer, sans entraîner de déformation de cette dernière.

La revendication 2 définit un générateur de courant constant de construction particulièrement simple.

Les formes spéciales d'exécution définies par la revendication 3 ont l'avantage de conférer à la sortie du générateur de courant constant une tension de référence tout à fait fiable.

La revendication 4 définit une forme d'exécution préférée, en raison de sa simplicité et de sa fiabilité, du circuit d'alimentation d'un avertisseur optique.

Les formes spéciales d'exécution définies par la revendication 5 offrent l'option d'adjoindre un avertisseur acoustique à l'avertisseur optique de l'instrument.

Quant à la revendication 6, elle a l'énorme avantage d'exclure toute influence humaine sur la détermination de la cote à mesurer.

Enfin, la revendication 7 offre l'option d'utiliser l'instrument de deux façons, soit en régime manuel, pour mesurer une cote d'une pièce déterminée, soit en régime automatique, pour contrôler une cote déterminée d'une série de pièces identiques, imprimer les mesures effectuées et/ou répéter plusieurs fois la même mesure.

Une forme d'exécution de l'instrument selon l'invention est représentée schématiquement et à simple titre d'exemple au dessin, dans lequel:

la Fig. 1 en est une vue en élévation, une partie étant arrachée;

la Fig. 2 est une coupe à plus grande échelle d'une partie de la Fig. 1, et

la Fig. 3 représente le schéma de la partie électronique de l'instrument de la Fig. 1.

La forme d'exécution représentée de l'instrument selon l'invention est un micromètre. Sa partie mécanique est de construction conventionnelle. Elle comprend une table fixe 1, montée sur un socle 2 et un palpeur 3, perpendiculaire à cette table. Ce palpeur est monté sur une potence composée d'une colonne 4, solidaire du socle 2, et d'une paire de bras 5, 6. La distance entre ces bras peut être réglée par une vis 7. De plus, ils peuvent être déplacés le long de la colonne 4 à l'aide d'une vis 8 et solidarisés à cette colonne par une vis 9.

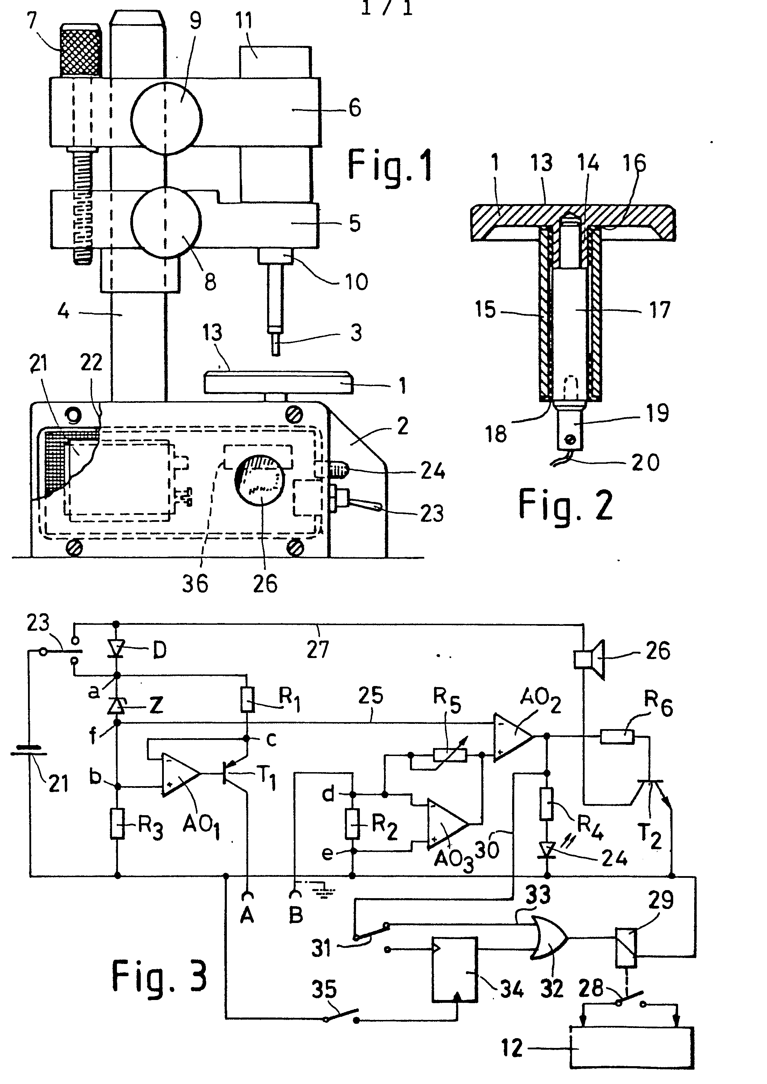

Le palpeur 3 peut être déplacé longitudinalement par rapport à une lunette 10, portée par le bras 5, par un moteur 11, porté par le bras 6. Il est relié électriquement de façon conventionnelle (non représentée) à un appareil 12 (Fig. 3) de type standard, qui affiche au dixième de micron les déplacements du palpeur 3 par rapport à la lunette 10 et par conséquent les variations de l'écart entre son extrémité et la table 1.

Dans la plupart des cas, la base de référence de la pièce à mesurer, par rapport à laquelle il s'agit de déterminer la cote d'un point déterminé de cette pièce, est la face inférieure de cette pièce. Dans ces cas, c'est la face supérieure 13 de la table 1 qui tiendra lieu de face d'appui pour la base de référence de la pièce à mesurer, en ce sens que cette base sera posée directement sur la table 1. Pour obtenir directement la valeur de la cote à déterminer sur l'écran de l'appareil 12, il faut opérer une mise à zéro de cet appareil en amenant le palpeur 3 en contact avec la face 13 de la table 1.

Il existe cependant des pièces, dans lesquelles la base de référence se trouve entre les points extrêmes, par exemple lorsque des languettes élastiques partent d'une embase et se dirigent au-dessus et au-dessous de celle-ci. Comme l'embase de ces pièces ne peut pas être posée à plat sur la face 13 de la table 1, il faut recourir à un support qui peut être constitué par un bloc cylindrique, prismatique ou en forme de tronc de cône ou de pyramide, pourvu que ses bases planes extrêmes soient bien parallèles entre elles. L'une des bases de ce support est alors posée sur la face 13 de la table 1 et l'embase de la pièce à mesurer sur l'autre base de ce support. La mise à zéro de l'appareil 12 sera effectuée, dans ce cas, en amenant le palpeur 3 en contact avec la base supérieure du dit support ou, le cas échéant, avec la face supérieure de l'embase de la pièce à mesurer.

Comme le montre la Fig. 2, la table 1 présente un téton central taraudé 14, qui est engagé dans un manchon 15, solidaire du socle 2, avec interposition d'une manchette isolante 16. Un tigeron 17 a son extrémité supérieure vissée à fond dans le téton 14 de la table 1 et son extrémité inférieure maintenue dans l'axe du manchon 15 par une seconde manchette isolante 18. Une fiche banane 19, fixée à l'extrémité d'un conducteur 20 est engagée dans un trou borgne, formé à l'extrémité inférieure du tigeron 17. Quant au palpeur 3, il est relié électriquement à la masse du bâti du micromètre.

La Fig. 3 représente le schéma des circuits de commande du micromètre décrit. Ces circuits sont alimentés en courant continu par une batterie 21 de 9V, par exemple, logée dans le socle 2, qui est creux et qui est fermé par une plaque vissée 22 (Fig. 1). Le pôle positif de la batterie 21 est relié à la manette d'un interrupteur 23 (voir aussi Fig. 1) à trois positions. Dans celle représentée à la Fig. 3, les circuits de commande du micromètre sont déclenchés.

Lorsque la manette de l'interrupteur 23 est déplacée dans sa position inférieure de travail, le circuit de mesure du micromètre est mis sous tension. Il arrive à la borne A en passant par une résistance $R_1$ et un transistor $T_1$, puis va de la borne B au pôle négatif de la batterie par une résistance $R_2$. Aux bornes A et B sont connectés respectivement la table 1 et le palpeur 3. Un circuit de référence, comprenant une diode Zener Z et une résistance $R_3$, est branché en parallèle au circuit de mesure. La diode Z a pour effet de maintenir une différence de potentiel bien déterminée entre les points a et b du circuit de référence, qui sera de préférence de 3V, de sorte que le point b sera à 6V dans l'exemple choisi. Ce point b est connecté à l'entrée positive d'un amplificateur opérationnel $AO_1$, à entrées différentielles, dont la sortie polarise la base du transistor $T_1$. Quant à l'entrée négative de l'amplificateur $AO_1$, elle est contre-réactionnée à partir de la sortie c de la résistance $R_1$.

Au moment où le circuit de mesure se ferme par l'entrée en contact du palpeur 3 avec un point de la pièce à mesurer, un courant passe dans le circuit de mesure. Le potentiel du point c tend alors à décroître d'autant plus que la résistance du contact entre le palpeur 3 et la pièce à mesurer est plus faible. L'amplificateur $AO_1$ a cependant pour effet de maintenir constamment son entrée négative, c'est-à-dire aussi le point c, au même potentiel que son entrée positive. Il s'ensuit que la chute de tension à travers la résistance $R_1$ est égale en permanence à celle de référence, qui est déterminée par la diode Z, soit à 3V, dans l'exemple choisi. Si l'on branche dans le circuit de mesure une résistance $R_1$, par exemple de un mégohm, le courant de mesure ne dépassera pas trois microampères. Il ne descendra pas, d'ailleurs, au-dessous de cette valeur, car plus l'amplificateur $AO_1$ est sollicité pour maintenir le potentiel du point c à 6V, plus sa sortie agit sur la base du transistor $T_1$ de façon à en réduire la conductibilité et cela en rapport direct avec la décroissance de la résistance du contact entre le palpeur 3 et la pièce à mesurer, cela tout au moins dans la plage des valeurs que la résistance de ce contact prend en pratique.

Le courant de trois microampères qui circule ainsi dans le circuit de mesure, lorsque le palpeur 3 vient d'entrer en contact avec la pièce à mesurer, a pour effet de créer une différence de potentiel bien déterminée aux bornes d et e de la résistance $R_2$. C'est précisément cette différence de potentiel qui est utilisée pour exciter le circuit d'alimentation de la diode électro-luminescente 24 (voir aussi la Fig. 1).

Ce circuit est alimenté à partir du point f, au même potentiel que le point b, soit à 6V, par un conducteur 25, un amplificateur opération-nel de puissance $AO_2$, fonctionnant comme comparateur, et une résistance $R_4$. Le conducteur 25 est connecté à l'entrée négative de l'amplificateur $AO_2$, qui est excité en permanence par des conducteurs (non représentés) reliés directement aux bornes de la batterie 21. L'entrée positive de l'amplificateur $AO_2$ est connectée à la sortie d'un amplificateur opération-nel de tension $AO_3$ à gain variable, qui est également excité en permanence par un conducteur (non représenté) relié directement au pôle positif de la batterie 21. L'entrée négative de l'amplificateur $AO_3$ est con-tre-réactionnée par sa sortie à travers une résistance variable $R_5$, qui peut aller jusqu'à trois mégohms.

Avant que le palpeur n'atteigne la pièce à mesurer, il n'y a pas de différence de potentiel sensible entre le point d, qui est relié à la borne B, donc à la masse du bâti du micromètre et éventuellement à la terre, et le point e, qui est relié au pôle négatif de la batterie, de sorte que le potentiel de l'entrée positive de l'amplificateur $AO_2$ est voisine de 0V, soit largement au-dessous du potentiel de son entrée négative, qui est de 6V. Dans ces conditions, l'amplificateur $AO_2$ est inactif; il ne débite aucun courant à sa sortie et la diode 24 reste éteinte.

Aussitôt que le palpeur 3 entre en contact avec la pièce à mesurer et qu'un courant passe donc dans le circuit de mesure, une différence de potentiel surgit aux bornes d et e de la résistance $R_2$. En supposant que la valeur de cette résistance soit de 1'000 ohms, le courant de trois microampères passant dans le circuit de mesure engendrera alors une différence de potentiel de 3mV entre les points d et e. Comme l'amplifica-teur $AO_3$ a la propriété d'élever la tension entre ses entrées, en principe, dans la proportion des résistances $R_5$, $R_2$, c'est à 9V qu'il est capable d'amener l'entrée positive de l'amplificateur $AO_2$, si la résistance $R_5$ atteint la valeur de trois mégohms. Dès que le potentiel de l'entrée posi-tive de l'amplificateur $AO_2$ est supérieur à celui de son entrée négative, la sortie de cet amplificateur débite à travers la résistance $R_4$ et la diode

24 un courant suffisant pour allumer cette dernière.

L'avertisseur optique constitué par la diode 24 est surtout intéressant dans le cas d'une variante simplifiée de l'instrument décrit, dans laquelle le moteur 11 est remplacé par une vis micrométrique que l'opérateur actionne manuellement. Pour mesurer la cote désirée dans ce cas, il lui suffit de faire descendre le palpeur en tournant la vis micrométrique jusqu'au moment précis où la diode 24 s'allume, puis d'en lire la valeur sur l'échelle de la vis micrométrique.

Dans une autre variante, l'avertisseur optique décrit pourrait être remplacé par un avertisseur sonore, tel qu'un vibreur, par exemple.

Si, dans la forme d'exécution représentée, on amène la manette de l'interrupteur 23 dans sa position de travail supérieure, les circuits de mesure du micromètre et d'alimentation de la diode 24 travaillent dans les conditions décrites précédemment, à cette seule différence près que les entrées de la diode Z et de la résistance $R_1$ ne sont plus connectées directement au pôle positif de la batterie 21, mais à travers la diode D. Dans cette nouvelle position de travail de l'interrupteur 23, la batterie 21 peut actionner un avertisseur sonore 26, en plus de la diode 24. L'avertisseur 26, qui peut consister en un vibreur, est connecté directement au pôle positif de la batterie 21 par un conducteur 27 et à son pôle négatif par un transistor $T_2$ de la classe n-p-n. Normalement, ce dernier est toutefois bloqué. Lorsque l'amplificateur $AO_2$ devient actif, par suite de la fermeture du contact entre le palpeur 3 et la pièce à mesurer, il polarise toutefois la base du transistor $T_2$ à travers la résistance $R_6$, de façon à rendre ce transistor conducteur.

Comme indiqué ci-dessus, le micromètre décrit est encore associé à un appareil 12, qui exclut tout facteur humain dans l'évaluation du moment où la diode 24 ou le vibreur 26 entrent en fonction.

L'ouverture du contact 28 a pour effet d'interrompre la liaison entre le palpeur 3 et l'appareil 12 de façon à bloquer sur l'écran de cet appareil la valeur affichée au moment précis de cette ouverture. Le pôle mobile du contact 28 fait partie d'un relais 29, qui est excité par la sortie de l'amplificateur $AO_2$ à travers un conducteur 30, un commutateur à deux positions 31 et une fonction logique "ou" 32, qui est connectée directement par un conducteur 33 à l'un des pôles fixes du commutateur 31 et à travers une bascule bistable 34 à l'autre pôle fixe de ce commutateur.

Dans la position représentée du commutateur 31, l'excitation du relais 29 tombe et le contact 28 se referme en rétablissant la liaison entre le palpeur 3 et l'appareil 12, dès que l'amplificateur $AO_2$ n'est plus actif, c'est-à-dire dès que le circuit de mesure est rouvert soit par éloignement du palpeur 3 soit par retrait de la pièce mesurée. Cette position du commutateur 31 convient ainsi à l'utilisation du micromètre en régime automatique, dans lequel les lectures de cotes effectuées par l'appareil 12 sont par exemple imprimées sur bande ou lorsqu'il s'agit de contrôler si une cote déterminée des pièces d'une série de fabrication sont dans les tolérances prescrites ou encore si l'on veut effectuer plusieurs fois de suite la mesure de la même cote, afin de déceler la dispersion éventuelle des valeurs affichées par l'appareil 12 et de se faire ainsi une idée de la précision de la mesure elle-même. L'autre position du commutateur 31 convient plutôt à une utilisation du micromètre en régime manuel. L'excitation de la bascule 34 par l'amplificateur $AO_2$ a pour effet de fermer un circuit de maintien (non représenté) du relais 29. La valeur affichée sur l'écran de l'appareil 12 demeure alors visible, même si le palpeur 3 est éloigné de la pièce mesurée ou si cette dernière est retirée du micromètre. Pour ramener la bascule 34 dans sa position initiale et rétablir la liaison opérationnelle entre le palpeur 3 et l'appareil 12, il faut presser manuellement le bouton d'un contact 35, relié au pôle négatif de la batterie.

On remarquera qu'avec la connexion de l'appareil 12 aux circuits de commande décrits, les avertisseurs 24 et 26 ne sont pas absolument indispensables. Leur seule fonction est d'attirer l'attention de l'opérateur sur l'écran de l'appareil 12.

Les circuits de mesure du micromètre et d'alimentation des avertisseurs 24 et 26 sont montés, tout comme ces avertisseurs, dans le socle du micromètre ainsi que le montre la Fig. 1 en 36. Quant aux éléments de circuit 28, 29 et 31 à 35, ils peuvent être montés dans le boîtier de l'appareil 12, qu'il suffit alors de relier au micromètre par un câble comprenant le conducteur 30 et un conducteur (non représenté) établissant la connexion du palpeur 3 à l'appareil 12.

R E V E N D I C A T I O N S :

1.    Instrument de mesure par contact électrique de la cote d'un point d'une pièce, mesurée à partir d'une base de référence de cette pièce, comprenant une face d'appui pour la base de référence de la pièce à mesurer, un palpeur mobile perpendiculairement à la dite face d'appui, des organes de mesure étalonnés, qui permettent de déterminer les modifications de l'écart entre ce palpeur et la dite face d'appui, et deux circuits électriques alimentés par une source de courant continu, le premier de ces circuits étant normalement ouvert, mais se fermant lorsque le dit palpeur entre en contact avec une pièce à mesurer, disposée sur la dite face d'appui, et le second comprenant un avertisseur et devenant actif, dès que le premier est fermé,

caractérisé

en ce que le premier des dits circuits, qui assure la mesure, comprend un générateur de courant constant ($R_1$, $T_1$, $AO_1$, Z) qui, au moment précis où le palpeur (3) entre en contact avec une pièce à mesurer, envoie à travers cette pièce un courant dont l'intensité a une valeur prédéterminée, indépendante de la résistance ohmique du contact entre le palpeur et la pièce.

2.    Instrument de mesure selon la revendication 1,
caractérisé
- en ce que le générateur de courant constant comprend une résistance ($R_1$) dont la valeur est supérieure à celle que le contact entre le palpeur (3) et la pièce à mesurer peut prendre
- et en ce que, lorsque le premier des dits circuits est fermé, un amplificateur opérationnel à entrées différentielles ($AO_1$) maintient la chute de tension à travers cette résistance ($R_1$) à une valeur constante, égale à une fraction de la tension de la dite source de courant (21), en faisant varier par sa sortie la polarisation de la base d'un transistor ($T_1$) ayant ses pôles - émetteur, collecteur - branchés en série avec la dite résistance ($R_1$).

3.    Instrument de mesure selon la revendication 2,
caractérisé
en ce que la valeur constante de la chute de tension à travers la dite résistance ($R_1$) est déterminée par une diode Zener (Z).

0100807

4. Instrument de mesure selon la revendication 1, la revendication 2 ou la revendication 3,

caractérisé

- en ce que le dit avertisseur est constitué par une diode électro-luminescente (24), dont la tension d'alimentation est égale à une fraction de celle de la dite source de courant (21)

- et en ce qu'un amplificateur opérationnel de puissance ($AO_2$), dont l'entrée négative est connectée à un point (f) du premier des dits circuits, dont le potentiel est au moins égal à la dite tension d'alimentation, alimente la dite diode (24) lorsque son entrée positive est amenée à un potentiel supérieur à celui de son entrée négative par un amplificateur opérationnel de tension ($AO_3$), dont les entrées sont connectées à deux points (d, e) de potentiels différents de la branche du premier des dits circuits, qui est reliée à la masse.

5. Instrument de mesure selon la revendication 4,

caractérisé

en ce qu'il comprend en outre un avertisseur sonore (26) qu'un interrupteur (23) permet d'alimenter par la source de courant (21) des dits circuits, à travers un transistor n-p-n ($T_2$), lorsque la base de ce dernier est polarisée de façon à le débloquer par le dit amplificateur opérationnel de puissance ($AO_2$).

6. Instrument de mesure selon la revendication 4 ou la revendication 5, dont le palpeur est associé à un dispositif d'affichage digital de la variation des écarts entre lui et la dite face d'appui, un contact permettant de bloquer la valeur affichée en l'actionnant,

caractérisé

en ce que le dit contact (28) est soumis à un relais (29) excité par le dit amplificateur opérationnel de puissance ($AO_2$).

7. Instrument de mesure selon la revendication 6,

caractérisé

par un commutateur (31) permettant d'envoyer le signal du dit amplificateur opérationnel ($AO_2$), au choix, à travers une bascule bistable (34) ou directement à une fonction logique "ou" (32), selon qu'il s'agisse d'exciter le relais (29) en régime de mesure manuelle ou automatique.

Fig.1

Fig. 2

Fig. 3

Office européen
des brevets

**RAPPORT DE RECHERCHE EUROPEENNE**

EP  82 81 0341

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | GB-A-2 025 073  (ROLLS-ROYCE LTD.) <br> * Abrege ; figure 4 * | 1 | G 01 B    7/00 |
| A | DE-A-1 423 607  (WERKSPOOR N.V.) <br> * Revendications 1-4 ; figure 2 * | 1 | |

---

**DOMAINES TECHNIQUES RECHERCHES (Int. Cl. 3)**

G 01 B    7/00

Le présent rapport de recherche a été établi pour toutes les revendications

| Lieu de la recherche <br> BERLIN | Date d'achèvement de la recherche <br> 30-03-1983 | Examinateur <br> KOEHN G |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82